# FASCICULE DE BREVET EUROPEEN

(11) **EP 3 116 731 B1**
(45) Date de publication et mention de la délivrance du brevet: **12.02.2020**
(21) Numéro de dépôt: 15707976.5
(22) Date de dépôt: 05.03.2015
(51) Int. Cl.: B60J 1/16, B60J 1/18, E05B 65/00, E05B 65/08

(54) **DISPOSITIF D'OBTURATION D'UNE BAIE D'UN VEHICULE AUTOMOBILE A PANNEAU COULISSANT, A DOUBLE COMMANDE, ET VEHICULE CORRESPONDANT**
SCHLIESSVORRICHTUNG FÜR EINE FAHRZEUGÖFFNUNG UMFASSEND EINE VERSCHIEBLICHE PLATTE, UND ENTSPRECHENDES FAHRZEUG
CLOSING MEANS FOR A VEHICLE OPENING COMPRISING A SLIDABLE PANEL, AND CORRESPONDING VEHICLE

(30) Priorité: 12.03.2014 FR 1452061; 25.04.2014 FR 1453722
(43) Date de publication de la demande: 18.01.2017
(73) Titulaire: Advanced Comfort Systems France SAS - ACS France, 79302 Bressuire Cedex (FR)
(72) Inventeur: PATANCHON, Pierre, 79300 Bressuire (FR)
(74) Mandataire: Vidon Brevets & Stratégie
(86) Numéro de dépôt international: PCT/EP2015/054685
(87) Numéro de publication internationale: WO 2015/135842

(56) Documents cités:
- EP-A1- 1 659 247
- EP-A1- 1 916 132
- US-A1- 2012 068 478

## Description

### 1. Domaine de l'invention

Le domaine de l'invention est celui des baies de véhicule automobile. Plus précisément, l'invention concerne les dispositifs d'obturation d'une baie ménagée dans la carrosserie d'un véhicule, et comprenant une partie fixe rapportée de façon affleurante sur la carrosserie, par collage, et une partie mobile coulissante, essentiellement vitrée, susceptible de libérer ou de fermer une ouverture ménagée dans la partie fixe. Un dispositif de ce type est connu du document EP 1916132 A.

### 2. Techniques de l'art antérieur

Classiquement, pour obturer la baie d'un véhicule, qu'il s'agisse d'une automobile, d'un véhicule utilitaire, d'un camion, d'un autobus ou d'un wagon de chemin de fer, on rapporte une glace, maintenue par un cadre de liaison. Ce dernier présente une partie interne et une partie externe, qui viennent pincer simultanément les bords de la glace et de l'ouverture ménagée dans la carrosserie, avec une garniture d'étanchéité.

Une autre technique est décrite notamment dans les documents de brevet EP 0 778 168 et EP 0 857 844, au nom du titulaire de la présente demande de brevet. Le dispositif d'obturation présenté dans ces documents (appelé aussi par la suite « baie flush ») comprend une partie fixe comportant une portion vitrée, et une partie mobile essentiellement vitrée par rapport à la partie fixe. La partie mobile est reliée à la partie fixe par des éléments fonctionnels, ou rails, qui permettent la mobilité requise et qui sont rapportés sur la face de la partie fixe tournée vers l'intérieur du véhicule.

Une telle « baie flush » peut être montée intégralement indépendamment du véhicule, et rapportée, depuis l'extérieur, dans le logement défini à cet effet sur la carrosserie du véhicule. Elle peut également être solidarisée, en particulier par collage à la partie inférieure d'une portière, selon la technique décrite dans le document de brevet EP 1022 172.

Sur le plan esthétique, la « baie flush » présente, vu de l'extérieur, un aspect lisse, affleurant avec la carrosserie (d'où le terme « flush » souvent utilisé dans le domaine), du fait qu'aucun cadre n'est nécessaire entre les bords de la carrosserie et la « baie flush ».

Pour assurer un coulissement du panneau mobile, constitué généralement par un panneau transparent, les moyens fonctionnels comprennent un dispositif de guidage comportant un premier et un second rails de guidage montés fixes sur le panneau fixe de la baie, de part et d'autre de l'ouverture fermée par le panneau mobile. Celui-ci est monté sur les rails, pour coulisser selon une direction longitudinale, dans un plan de coulissement entre une (ou plusieurs) position(s) d'ouverture et une position intermédiaire de dégagement dans laquelle il est en regard de la baie et dégagé de celle-ci.

Selon diverses techniques particulières, des moyens assurent la liaison du panneau mobile avec les rails de guidage de façon à permettre un déplacement transversal du panneau mobile entre sa position intermédiaire de dégagement dans laquelle il est en regard et en retrait transversal de la baie, et sa position d'obturation dans laquelle il est enchâssé dans la baie.

De tels moyens de guidage permettent ainsi à la partie mobile de passer du plan formé par la partie fixe (position d'obturation) à un plan sensiblement parallèle de coulissement, et réciproquement.

Il est également possible de combiner les deux mouvements, sous la forme d'un mouvement louvoyant, selon lequel le bord distal (c'est-à-dire le bord éloigné des moyens de verrouillage, également appelé bord avant) de la partie mobile se trouve, en fin de course, dans le plan de la baie (la partie mobile étant alors « en travers », entre le plan d'obturation et le plan de coulissement). Il suffit alors de ramener, manuellement, le bord proximal (c'est-à-dire le bord proche des moyens de verrouillage, également appelé bord arrière) pour assurer l'obturation.

L'invention se rapporte plus particulièrement à ce type de dispositif d'obturation, à ses variantes et ses perfectionnements.

Plusieurs solutions ont été proposées, notamment par le Demandeur, pour le verrouillage de la partie mobile dans la position fermée, et le cas échéant, dans des positions d'ouverture choisies. Elles sont souvent peu ergonomiques et/ou peu pratiques et nécessitent notamment de procéder à un effort, par exemple de serrage ou de rotation pour obtenir le verrouillage et/ou le déverrouillage. Notamment, elles présentent généralement de présenter des surfaces de préhension de taille réduite, imposée par la normalisation qui impose une taille limite (par exemple une saillie inférieure ou égale à 25 mm par rapport à la partie fixe) pour les éléments faisant saillie vers l'intérieur du véhicule. Ces dimensions rendent difficiles l'action de déverrouillage et/ou le guidage en coulissement.

Un autre inconvénient des techniques connues est que, pour permettre d'effectuer avec une même poignée (ou avec un même ensemble de poignées, dans le cas où deux éléments de poignée sont proposés) les opérations de déverrouillage et de déplacement, il est généralement nécessaire de prévoir des moyens complexes pour l'actionnement, la transmission de l'action vers les pênes, le rappel dans une position de repos,... De plus, le montage, qui suppose de nombreuses pièces, est complexe et peut nécessiter des réglages particuliers.

Pour tenter de résoudre ces problèmes, il a été proposé par le Demandeur, dans le document de brevet EP 2196341, de monter une poignée d'actionnement de façon qu'elle s'étende à partir de l'un desdits bords latéraux de la portion de cadre. On respecte ainsi l'obligation relative à une dimension limite de la poignée, vers l'intérieur du véhicule.

La solution proposée est relativement simple, techniquement, car le déplacement des deux membres de la poignée est parallèle au déplacement des pênes. Cependant, ce mode d'actionnement n'apparaît pas ergonomique ni intuitif, par rapport au déplacement du panneau en coulissement, une fois déverrouillée.

D'autres solutions sont proposées, dans d'autres documents. Selon ces techniques, le panneau mobile porte une poignée d'actionnement des pênes qui est mobile selon une direction d'actionnement parallèle à ladite direction de coulissement (« mouvement en X », pour une vitre latérale, X représentant l'orientation principale du véhicule).

On dispose ainsi d'un mécanisme simple et efficace, et aisé à manipuler. Le déverrouillage est simple et ergonomique, car il se fait dans le sens du mouvement d'ouverture du panneau mobile.

Cependant, ces solutions peuvent présenter, en pratique, un risque de sécurité, par rapport à des tentatives d'intrusion. En effet, une personne mal intentionnée peut introduire un objet ou un outil (tige, tournevis,...) entre la partie fixe et le panneau mobile, en forçant sur le cadre portant la vitre coulissante, placer l'extrémité de cet objet ou outil en contact avec la poignée d'actionnement ou une pièce qui lui est solidaire, puis forcer le déplacement de la poignée, et donc la libération des pênes, en déplaçant l'extrémité de cet objet ou outil.

### 3. Objectifs de l'invention

Il existe donc un besoin d'amélioration de la sécurité anti-effraction d'une telle baie flush, pour rendre celle-ci sinon inviolable, à tout le moins très difficile à forcer par une personne mal intentionnée.

L'invention a également pour objectif, au moins dans certains modes de réalisation, de fournir un dispositif d'obturation d'une baie qui permette un verrouillage et un déverrouillage, et plus généralement une ouverture et une fermeture, aisés, intuitifs et sans effort important.

Encore un autre objectif particulier de l'invention est, au moins dans certains modes de réalisation, de fournir un tel dispositif d'obturation qui soit peu encombrant et à faible débattement, tout en respectant les contraintes normatives et en offrant une bonne ergonomie.

### 4. Caractéristiques principales et optionnelles de l'invention

Tout ou partie de ces objectifs, ainsi que d'autres qui apparaîtront par la suite, sont atteints à l'aide d'un dispositif d'obturation d'une baie formée dans un élément de carrosserie d'un véhicule automobile, comprenant une partie fixe et au moins un panneau mobile par rapport à ladite partie fixe, guidé en coulissement par deux rails portés par ladite partie fixe. Ledit panneau mobile porte deux pênes aptes à coopérer avec deux gâches correspondants, formés respectivement dans chacun desdits rails, et mobiles selon une direction de déverrouillage perpendiculaire à la direction de coulissement dudit panneau mobile, entre une position de verrouillage dans laquelle lesdits pênes sont en prise avec lesdites gâches, et une position de déverrouillage, permettant le coulissement, dans laquelle lesdits pênes sont extraits desdites gâches.

Ledit panneau mobile porte également au moins des moyens d'actionnement desdits pênes, mobiles selon une direction d'actionnement parallèle à ladite direction de coulissement, et des moyens de renvoi d'angle transformant le mouvement desdits moyens d'actionnement dans une direction de déverrouillage, pour contrôler le déplacement d'un desdits pênes.

Selon l'invention, le dispositif d'obturation comprend des moyens de blocage desdits moyens d'actionnement.

Ainsi, une personne mal intentionnée ne peut pas tenter de contrôler depuis, l'extérieur, le déplacement des moyens d'actionnement pour obtenir un déverrouillage dudit panneau mobile. Même si un outil ou un objet est amené en contact avec ces moyens d'actionnement, ceux-ci ne peuvent pas être déplacés, puisqu'ils sont bloqués par les moyens de blocage.

Pour assurer le déverrouillage des pênes, il est donc nécessaire d'agir simultanément, ou quasi-simultanément, sur les moyens de déblocage et les moyens d'actionnement.

On dispose ainsi d'une double commande, permettant de fortement augmenter la sécurité.

Selon l'invention, lesdits moyens de blocage et lesdits moyens d'actionnement sont actionnables simultanément, à l'aide d'une seule main.

De cette façon, la manipulation reste aisée et intuitive, malgré la double commande.

Notamment, ledit panneau mobile porte au moins une portion de cadre s'étendant sensiblement entre les extrémités desdits pênes, et présentant une première ouverture sur sa face latérale s'étendant vers l'extérieur, respectivement vers ) l'intérieur, dudit panneau mobile et/ou sur sa façade, permettant le déplacement d'une poignée de déverrouillage appartenant auxdits moyens d'actionnement.

Ladite portion de cadre peut porter également, sur sa face latérale s'étendant vers l'intérieur, respectivement vers l'extérieur, dudit panneau mobile, une seconde ouverture permettant le déplacement d'un bouton de déblocage appartenant auxdits moyens de blocage.

Ainsi, les deux actionneurs, le bouton de déblocage et la poignée de déverrouillage sont placés en vis-à-vis, sur les bords latéraux du cadre, et l'utilisateur peut agir sur ceux-ci d'une seule main, par exemple entre le pouce et l'index. Après avoir déverrouillé de cette façon, l'utilisateur peut, avec la même prise, déplacer le panneau mobile en coulissement.

Selon un premier mode de réalisation particulier, ces actionneurs sont montés de façon que :
- dans une position de fermeture, ladite poignée de déverrouillage est maintenue bloquée par un élément de blocage ;
- dans une position d'ouverture, ledit bouton de déblocage assure le déplacement dudit élément de blocage de façon à libérer ladite poignée de déverrouillage.

Dans ce cas, ledit bouton de déblocage peut porter une lame rigide, agissant sur une pièce intermédiaire basculante pouvant passer d'une position de blocage à une position de libération, dans laquelle elle déplace ledit élément de blocage de façon à libérer ladite poignée de déverrouillage.

Ladite pièce intermédiaire peut notamment présenter un pan incliné, coopérant avec ladite lame rigide.

Selon un deuxième mode de réalisation particulier, ces actionneurs sont montés de façon que :
- dans une position de fermeture, ladite poignée de déverrouillage est maintenue bloquée par un prolongement dudit bouton de déblocage, s'opposant au coulissement de ladite poignée de déverrouillage ;
- dans une position d'ouverture, ledit prolongement bascule vers l'intérieur du véhicule, de façon à libérer ladite poignée de déverrouillage.

Dans ce cas, ladite portion de cadre peut présenter une surface fixe, s'étendant au moins au-dessus dudit prolongement.

Ceci permet d'empêcher une personne mal intentionnée d'agir sur le bouton de déblocage, celui-ci étant protégé par la surface fixe.

Selon un aspect particulier, ladite portion de cadre peut porter au moins un élément de guidage de ladite poignée de déverrouillage selon ladite direction d'actionnement.

Des moyens de rappel peuvent être prévus, pour ramener les moyens d'actionnement et les moyens de déblocage dans une position de repos, correspondant à la position verrouillée (ou position fermée).

Selon un mode de réalisation particulier, le dispositif comprend des moyens de rappel agissant sur chacun desdits pênes, et tendant à les ramener dans ladite position de verrouillage. Dans ce cas, lesdits moyens de transmission peuvent être adaptés pour ramener ladite poignée de déverrouillage et/ou ledit bouton de déblocage dans une position verrouillée, lorsque lesdits moyens de rappel ramènent lesdits pênes dans ladite position de verrouillage.

L'invention concerne également les véhicules automobiles comprenant au moins un dispositif d'obturation tel que décrit ci-dessus.

### 5. Liste des figures

D'autres caractéristiques et avantages de l'invention apparaîtront plus clairement à la lecture de la description suivante d'un mode de réalisation préférentiel, donné à titre d'exemple illustratif non limitatif, et des dessins annexés, parmi lesquels :
- la figure 1 illustre schématiquement une « baie flush » mettant en œuvre l'invention ;
- les figures 2A et 2B Les figures 2A à 2C illustrent un premier mode de réalisation de l'invention, dans la position fermée, ou verrouillée :

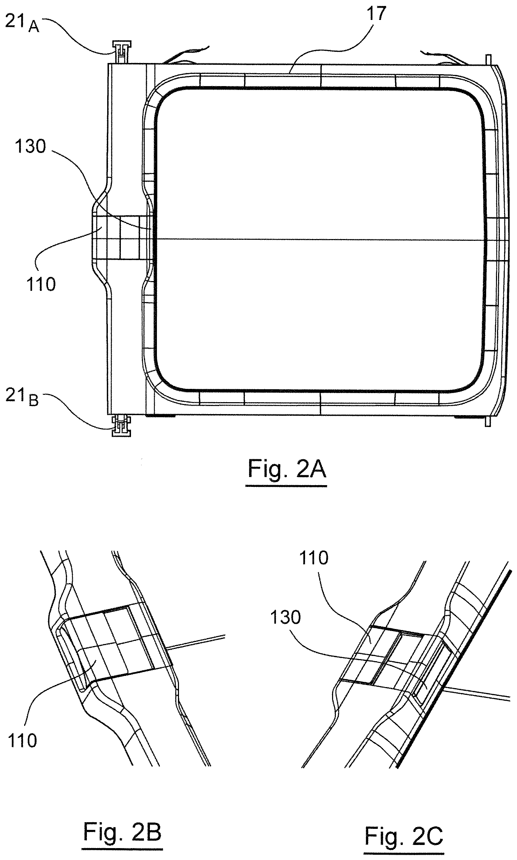

   - figure 2A : vue du panneau mobile ;
   - figures 2B et 2C : deux vues partielles de la portion de cadre du panneau mobile portant les moyens d'actionnement, ou de déverrouillage, et de déblocage ;

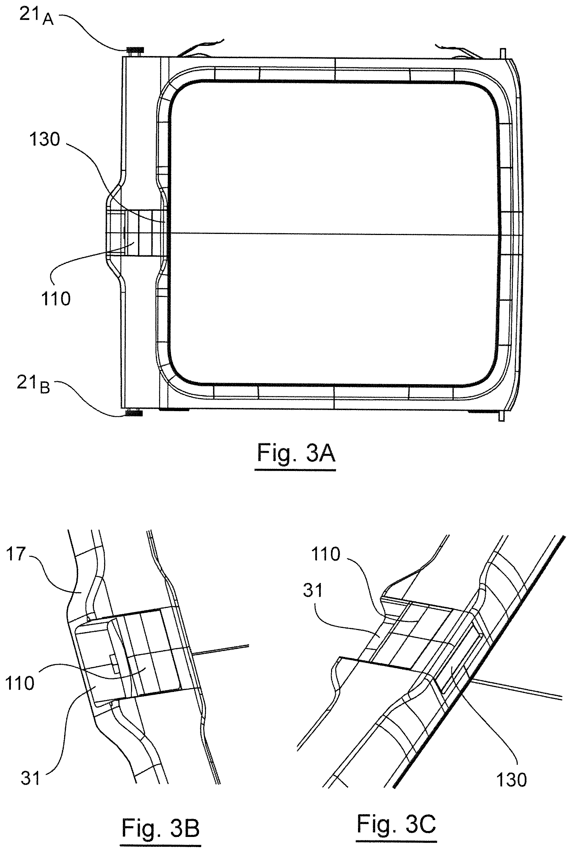

- les figures 3A à 3C correspondent aux figures 2A à 2C, dans la position ouverte, ou déverrouillée ;

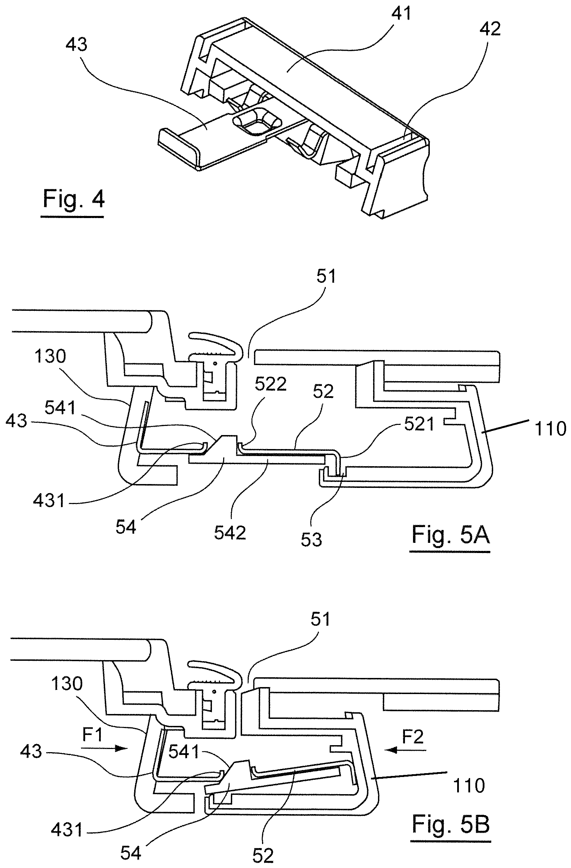

- la figure 4 illustre le bouton de déblocage, selon le premier mode de réalisation des figures 2A à 3C ;
- les figure 5A et 5B sont des vues en coupe simplifiées illustrant le principe de fonctionnement, selon ce premier mode de réalisation, respectivement dans la position verrouillée et dans la position déverrouillée ;

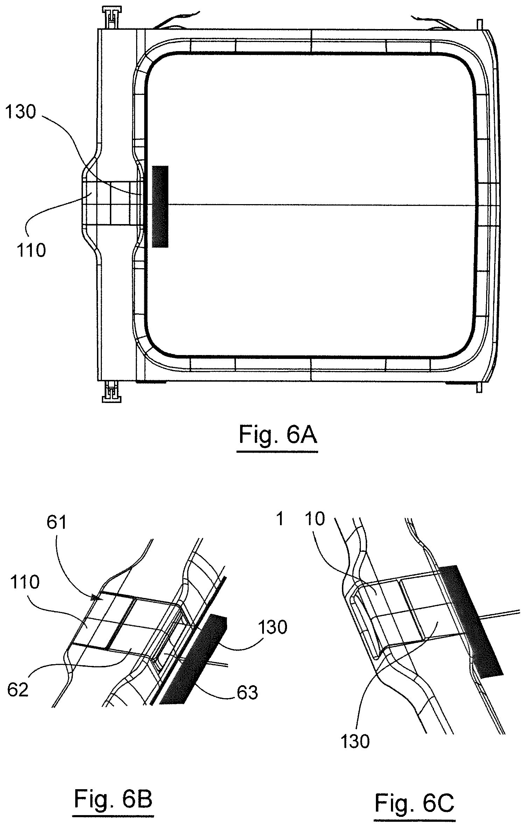

- les figures 6A à 6C illustrent un deuxième mode de réalisation de l'invention, en position fermée, ou verrouillée ;
   - la figure 6A : vue du panneau mobile ;
   - les figures 6B et 6C : deux vues partielles de la portion de cadre du panneau mobile portant les moyens de déverrouillage et de déblocage ;

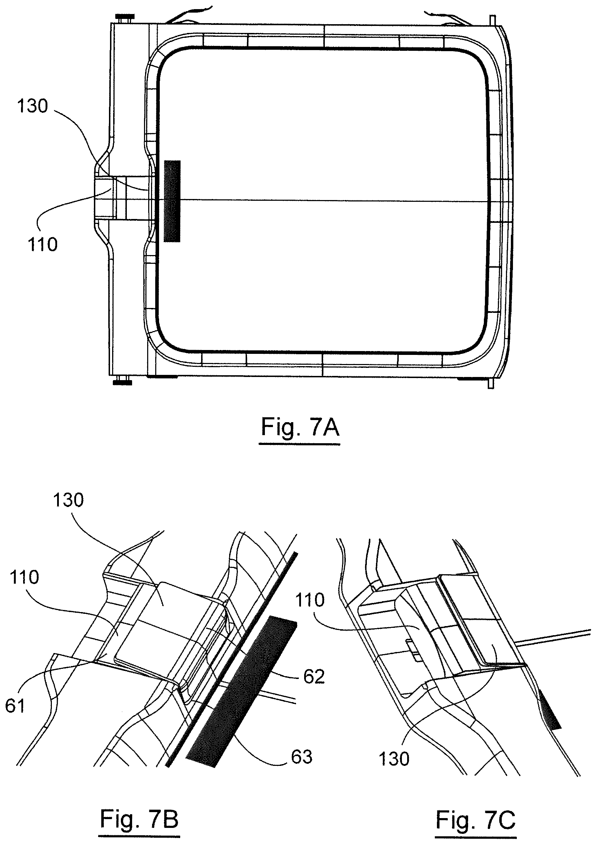

- les figures 7A à 7C correspondent aux figures 2A à 2C, dans la position ouverte, ou déverrouillée ;

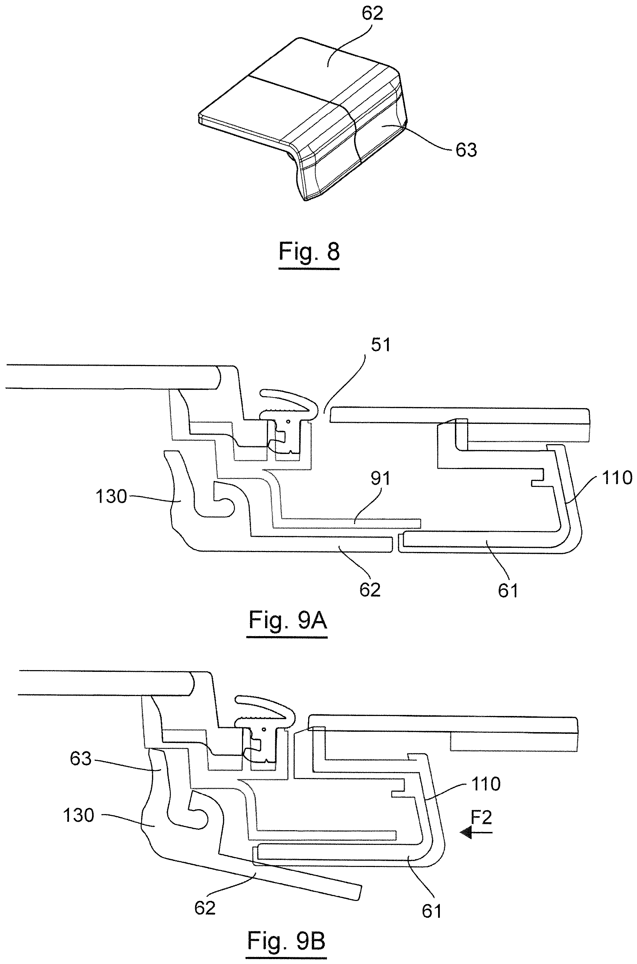

- la figure 8 présente le bouton de déblocage, selon ce deuxième mode de réalisation ;
- les figures 9A et 9B sont des vues en coupe simplifiées, illustrant le fonctionnement de ce deuxième mode de réalisation, respectivement dans la position verrouillée et dans la position déverrouillée.

### 6. Exemples de mise en œuvre

### 6.1 présentation générale d'une « baie flush »

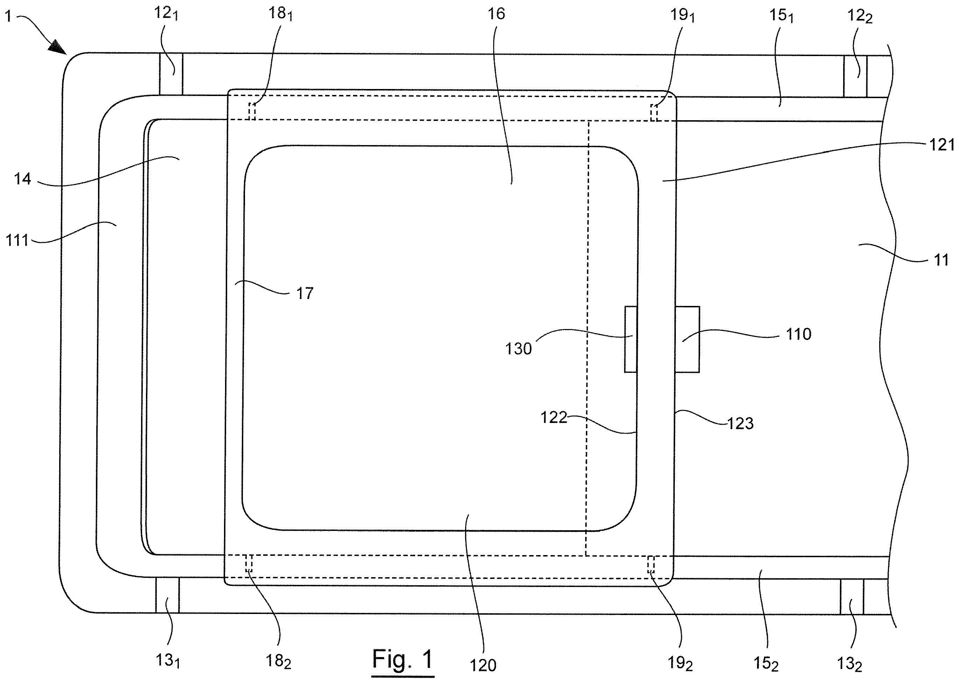

Un exemple de dispositif d'obturation 1 d'une baie formée dans un élément de carrosserie d'un véhicule automobile (ou « baie flush ») conforme à l'invention est illustré schématiquement sur la figure 1. Cette « baie flush » est décrite à titre d'exemple, étant précisé que l'invention s'applique de façon plus générale à toutes les baies telles que décrites au début du paragraphe 4.

Une telle « baie flush » comprend tout d'abord une partie fixe 11, par exemple totalement ou essentiellement vitrée. Comme cela apparaît sur la figure 1, qui présente le côté destiné à être orienté vers l'intérieur du véhicule, la périphérie de la partie fixe 11 est libre (à l'exception des éléments 12₁, 12₂, 13₁ et 13₂ dont les fonctions sont rappelées ci-après). Ainsi, le dispositif d'obturation de la figure 1 peut être rapporté directement sur les bords d'une baie définie dans la carrosserie d'un véhicule depuis l'extérieur de celui-ci. Ces bords de la baie sont préférentiellement réalisés avec un léger retrait, correspondant sensiblement à l'épaisseur de la partie fixe 11, pour que celle-ci affleure avec le reste de la carrosserie, lorsqu'elle est montée sur le véhicule.

Notamment, la baie peut être formée dans une paroi latérale du véhicule (par exemple pour les véhicules utilitaires, les monospaces, les breaks,...), dans une paroi orientée vers l'arrière du véhicule (par exemple pour les « pick-up »), ou encore dans une portière (dans ce cas, les bords de la baie peuvent être en partie formés par des éléments de réception s'étendant depuis le caisson de la portière, le dispositif étant alors rapporté sur le bord supérieur du caisson et sur les éléments de réception qui s'étendent de celui-ci).

La solidarisation peut notamment être assurée à l'aide d'un joint, ou cordon, de colle (non représenté) est placé sur le pourtour de la partie fixe, ou sur les bords de la baie de la carrosserie, et la périphérie de la partie fixe 11 est ainsi directement solidarisée par collage, aux bords de la baie, sans qu'il soit nécessaire de prévoir un cadre ou tout autre élément de liaison intermédiaire. Le cordon de colle assure également, avantageusement une fonction d'étanchéité.

Une ouverture 14 est réalisée dans la partie fixe 11. Comme on le voit sur la figure 1, les bords de cette ouverture 14 sont éloignés de la périphérie de la partie fixe 11, pour permettre la solidarisation de celle-ci aux bords de la baie, comme expliqué ci-dessus.

La partie fixe 11 peut être réalisée sous la forme d'un seul élément vitré, en verre ou en plastique adapté à une application à l'automobile, dans lequel est réalisée l'ouverture 14. Par vitré, on entend ici tout matériau apte à laisser passer au moins partiellement la lumière (matériau transparent, translucide, teinté,...). Des zones sérigraphiées peuvent être prévues, pour des raisons de masquage et/ou de design.

La partie fixe 11 peut également être réalisée en plusieurs éléments constitutifs, ces éléments pouvant alors définir chacun un ou plusieurs côtés de l'ouverture 14. Une telle approche permet notamment de simplifier la réalisation de l'ouverture 14 dans un panneau de verre. Bien sûr, dans ce cas, les différents éléments constitutifs de la partie fixe se trouvent dans un même plan (qui peut, dans certains cas, être courbe, ou incurvé, dans au moins une dimension, par exemple pour suivre un galbe de la carrosserie). En effet, vue de l'extérieur, la partie fixe doit présenter un aspect lisse, ou affleurant.

La solidarisation de ces différents éléments constitutifs peut se faire par tout moyen adapté, par exemple par collage. Les rails 15₁ et 15₂ peuvent participer à cette solidarisation. Il est possible, sans sortir de l'invention, que l'un des éléments de la partie fixe ne soit pas vitré.

Selon une variante, la partie fixe 11 peut comprendre un élément de support, par exemple en par exemple en matière plastique, définissant notamment la périphérie de la partie fixe, et percée de deux ouvertures, l'une étant fermée de façon définitive par un élément vitré monté fixe, et la seconde correspondant à l'ouverture 14. L'élément de support et l'élément vitré fixe se trouvent dans le même plan, de façon à définir une surface lisse, vue de l'extérieur.

Le dispositif d'obturation comprend encore une partie mobile 16, pouvant venir obturer ou dégager l'ouverture 14. Cette partie mobile 16 comporte une portion vitrée 20, une portion de cadre, notamment un cadre 17 dans l'exemple illustré et un dispositif de verrouillage / déverrouillage. La partie mobile 16 est maintenue et guidée par les deux rails 15₁, 15₂, qui sont montés sur la face de la partie fixe orientée vers l'intérieur de véhicule et éloignés de la périphérie de cette partie fixe, pour les raisons déjà expliquées plus haut.

La partie mobile 16 peut être déplacée le long des rails 15₁, 15₂, dans un plan de coulissement sensiblement parallèle au plan défini par la partie fixe 11. Ainsi, la partie mobile 16 peut prendre une ou plusieurs positions d'ouverture, selon sa position par rapport aux rails 15₁, 15₂.

Par ailleurs, la partie mobile 16 peut se déplacer perpendiculairement au plan défini par la partie fixe 11, de façon à venir obturer l'ouverture 14, dans une position fermée, dans laquelle elle affleure avec cette partie fixe 11, de façon à proposer un ensemble affleurant (carrosserie, partie fixe et partie mobile).

La face du panneau fixe tournée vers l'intérieur du véhicule porte par ailleurs un joint d'étanchéité (non représenté sur la figure 1) collé sur le contour de l'ouverture 14, dont l'extrémité de la lèvre vient prendre appui sur le panneau mobile 16, lorsque celui-ci est en position d'obturation. Dans une variante, le joint d'étanchéité peut être monté sur le cadre 17, pour venir en contact avec la partie fixe 11.

Le mouvement de la partie mobile 16 par rapport à la partie fixe 11 peut, selon une première approche, se décomposer en deux déplacements indépendants :
- un déplacement perpendiculaire par rapport au plan formé par la partie fixe, permettant le passage d'une position fermée et verrouillée, dans laquelle la partie mobile se trouve dans le même plan que la partie fixe et l'ouverture, à une position de libération, dans laquelle la partie mobile est décalée par rapport à la partie fixe dans un plan de coulissement, de façon à permettre ce coulissement ;
- un déplacement dans le plan de coulissement, parallèle au plan formé par la partie fixe.

D'autres mouvements sont bien sûr possibles. Ainsi, selon une deuxième approche, la partie mobile peut louvoyer, c'est-à-dire suivre une courbe selon laquelle les deux mouvements (verrouillage / déverrouillage et coulissement) sont liés au moment de l'ouverture et de la fermeture.

Les rails 15₁ et 15₂ peuvent être solidarisés à la partie fixe 11 par collage ou par tout autre moyen adapté. Ils peuvent également être directement formés, par exemple par moulage ou surmoulage, sur la partie fixe 11. Ils sont généralement dissimulés, de même que les autres éléments fonctionnels, par de la sérigraphie, empêchant qu'on les voit depuis l'extérieur du véhicule.

Dans certains cas, les rails peuvent être non parallèles.

Par ailleurs, il peut être souhaitable, dans certains modes de réalisation, pour des raisons de sécurité (et en conséquence d'homologation au regard d'aspects réglementaires et/ou législatifs relatifs à la sécurité des véhicules) que les rails 15₁, 15₂ soient solidarisés à la carrosserie, et plus précisément aux bords de la baie. En effet, selon le règlement européen EC43 par exemple, il est imposé que, en cas de bris de verre (en l'occurrence de la partie fixe 11), les éléments susceptibles d'être projetés présentent une taille et/ou un poids inférieur à une limite prédéterminée, fortement dépassée par les rails ou la partie mobile. On comprend cependant, que si rien n'est prévu, en cas de bris de la partie fixe 11, ni les rails 15₁, 15₂ ni le panneau mobile 16 ne seront maintenus. Ils seront donc projetés, et risquent donc de blesser un passager du véhicule ou un passant.

Comme cela a été proposé dans le document de brevet EP 0 778 168, le titulaire de la présente demande a donc proposé d'équiper les rails 15₁, 15₂ de prolongements 12₁, 12₂, 13₁, 13₂, qui s'étendent sur la face tournée vers l'intérieur du véhicule de la partie fixe 11, de façon à être pris en sandwich entre le bord de la partie fixe 11 et le bord correspondant de la baie de la carrosserie.

Ainsi, le cordon de colle solidarisant la partie fixe 11 à la carrosserie solidarise également ces prolongements 12₁, 12₂, 13₁, 13₂ au bord de la carrosserie du véhicule. En conséquence, même lorsque la partie fixe 11 est brisée, et donc absente, les rails 15₁ et 15₂ sont maintenus en place par rapport à la carrosserie à l'aide de ces prolongements. Les rails 15₁ et 15₂ maintiennent quant à eux la partie mobile 16.

Ces prolongements peuvent être formés par moulage directement dans le rail, ou être rapportés sur celui-ci par tout moyen adéquat, par exemple par collage ou clippage.

Le rail inférieur 15₂ porte des prolongements 13₁, 13₂ présentant par ailleurs une ouverture suffisante pour permettre l'évacuation de l'eau recueillie dans le rail 15₂, correspondant par exemple à la condensation dans le véhicule. Cette eau est ainsi simplement et efficacement évacuée à l'extérieur du véhicule, sans que cela ne nuise à l'étanchéité. Les fonctions de maintien en cas de bris et d'évacuation de l'eau, peuvent bien sûr être assurées par des éléments distincts.

Selon le mode de réalisation illustré, les deux rails 15₁ et 15₂ sont formés dans une même pièce comprenant un élément de liaison 111, s'étendant entre les deux rails, le long d'un bord de la partie mobile 16. Cette pièce est collée à la partie fixe 11.

D'autres solutions peuvent être envisagées pour assurer cette solidarisation, sans sortir du cadre de l'invention. Dans certaines applications, il est également possible de s'affranchir de cette fonction.

Le cadre 17 s'étend sur la face de la partie mobile 16 orientée vers l'intérieur du véhicule. Ce cadre ne s'étend pas sur l'autre face, de façon à préserver l'aspect affleurant. Dans l'exemple illustré, le cadre 17 entoure la portion vitrée 120 sur la face de la partie mobile orientée vers l'intérieur du véhicule. Le cadre 17 présente une surface principale 121 sensiblement parallèle au plan défini par la portion vitrée 20 et deux bords latéraux 122 et 123 dont l'un au moins, en l'occurrence le bord latéral 122, relie le cadre 17 à la portion vitrée. Les bords latéraux 122 et 123 sont, dans l'exemple illustré, sensiblement perpendiculaires au plan défini par la portion vitrée 120.

Dans l'exemple illustré, le cadre 17 porte au moins un pion de guidage supérieur 18₁ et un pion de guidage inférieur 18₂ prévus pour être guidés dans une coulisse correspondante formée respectivement dans les rails 15₁ et 15₂.

D'autres pions peuvent être également prévus pour le guidage souhaité.

Dans le mode de réalisation illustré, le guidage est complété par des pions complémentaires 19₁, 19₂ qui assurent simultanément une fonction de pêne, coopérant avec des gâches prévues à cet effet dans les rails 15₁ et 15₂ de façon à verrouiller la partie mobile 16 dans sa position fermée (et le cas échéant dans une ou plusieurs positions d'ouverture prédéterminées, des gâches correspondantes étant alors ménagées dans les rails aux emplacements adéquats).

### 6.2 poignée de déverrouillage et bouton de déblocage

L'actionnement des deux pênes (qu'ils assurent ou non également une fonction de guidage en coulissement, et/ou une fonction de butée d'ouverture maximum) est assurée par au moins une poignée de déverrouillage 110 apte à agir sur les pênes est montée sur le cadre 17, pour actionner le déverrouillage des pênes, selon la technique décrite par la suite, et permettre de faire coulisser la partie mobile 16.

Conformément à l'invention, la poignée de déverrouillage 110 s'étend à partir de l'un des bords latéraux 122 et 123 du cadre 17, et non pas de sa surface principale 121. Ainsi, la poignée ne s'étend pas vers l'intérieur du véhicule, et la contrainte de longueur limitée dans cette dimension est respectée.

Dans l'exemple illustré, la poignée d'actionnement 110 s'étend à partir du bord latéral 123 du cadre 17. Des approches différentes, notamment avec une accessibilité partielle ou totale en façade sont possibles, comme illustré par la suite.

Le bord latéral 23 forme le pourtour extérieur du cadre 17. On ne sort pas de l'invention si le cadre 17 constitue seulement une portion de cadre (s'étendant par exemple uniquement sur la portion recouvrant les moyens reliant la poignée aux pênes) et non un cadre entourant complètement la portion vitrée mobile 120.

Pour assurer la sécurité anti-effraction et renforcer l'inviolabilité de cette baie, un bouton de déblocage 120 est prévu, placé dans ce mode de réalisation en vis-à-vis de la poignée de déverrouillage 110, sur le bord opposé 122 du cadre 17.

Ainsi, pour éviter qu'une personne mal intentionnée réussisse à déplacer la poignée de déverrouillage 110, depuis l'extérieur du véhicule, par exemple en introduisant un outil dans l'interstice 51 (voir figure 5A) entre la partie fixe de la baie et le panneau mobile, lorsque celui-ci est en position fermée, l'invention propose une double commande.

Il est nécessaire d'utiliser cette double commande, d'agir sur les deux éléments, pour éviter les verrouillages et boutons de déblocage pour pouvoir déverrouiller les deux pênes. Même si l'on a réussi à introduire un outil, et à le placer en contact avec la poignée de déverrouillage, il n'est pas possible, depuis l'extérieur, de la déplacer, puisque celle-ci est maintenue immobilisée par le bouton de déblocage.

De la même façon, de préférence, aucune action n'est possible sur le bouton de déblocage depuis l'extérieur, si la poignée de déverrouillage est dans sa position fermée, ou verrouillée.

Les figures 2A et 3A présentent le panneau mobile d'une baie flush selon l'invention, respectivement dans la position fermée et dans la position ouverte.

Lorsque la poignée de déverrouillage 110 est dans la position verrouillée (qui est une position par défaut, ou de repos, en l'absence d'action d'un utilisateur), les pênes 21A et 21B sont sortis, et se placent dans les gâches correspondantes de la partie fixe (non représentée), pour immobiliser le panneau mobile dans la position fermée.

Lorsque la poignée mobile 110 est déplacée (figures 3A à 3C) vers l'intérieur du panneau mobile, des moyens de transmission, comprenant notamment des moyens de renvoi d'angle (tels que ceux déjà décrits dans les documents de brevet susmentionnés) agissent sur les pênes 21A et 21B, pour les extraire de leurs gâches respectives, et permettre le déplacement du panneau mobile par rapport à la partie fixe.

Le cadre 17 présente un logement 31, défini pour recevoir et guider en translation la poignée de déverrouillage 110.

Comme déjà précisé, le cadre porte également un bouton de déblocage 130, s'étendant ici sur le bord latéral intérieur du cadre 17. On comprend que ce montage permet une manipulation particulièrement simple, puisque l'utilisateur peut, malgré la présence d'une double commande, assurer le déverrouillage d'une seule main, avec deux doigts, le pouce agissant par exemple sur le bouton de déblocage, et l'index sur la poignée de déverrouillage. Sans changer de prise, il est ensuite possible de faire coulisser le panneau mobile.

A l'inverse, il n'est pas possible, ou à tout le moins particulièrement difficile, d'agir sur les deux éléments simultanément (où selon les cas en léger décalage), et donc de réussir à déverrouiller le panneau mobile.

Comme on le voit sur la figure 4, le bouton de déblocage 130 comprend, selon ce premier mode de réalisation, un élément principal 41, formant zone d'appui, pour l'utilisateur, équipé ici de rainures de guidage 42, aptes à coopérer avec un élément de guidage complémentaire fixe par rapport au cadre (non représentée) pour contrôler le déplacement en translation de ce bouton.

Il porte également une lame 43, ici en métal, permettant d'assurer la libération de la poignée de déverrouillage, comme expliqué ci-après, à l'aide des figures 5A et 5B.

Dans la position fermée, ou verrouillée, illustrée par la figure 5A, la poignée de déverrouillage 110 est bloquée, à l'aide d'un élément de blocage 52, dont une extrémité 521 pénètre dans un logement 53 prévu à cet effet dans la poignée de déverrouillage 110.

On comprend que le logement 53 vient en prise avec l'extrémité 521 de l'élément de blocage 52, dont l'autre extrémité 522 est maintenue par une pièce intermédiaire 54, elle-même en contact avec l'extrémité 431 de la lame 43 du bouton de déblocage.

Ainsi, même si une personne mal intentionnée arrive à faire pénétrer un outil par l'interstice 51, il ne peut agir sur la translation de la poignée de déverrouillage 110. Il serait nécessaire de déplacer simultanément le bouton de déblocage 130.

Depuis l'intérieur en revanche, l'utilisateur qui appuie simultanément sur le bouton de déblocage 130 et la poignée de déverrouillage 110, pour les ramener l'un vers l'autre, comme illustré sur la figure 5B, obtient aisément le déverrouillage. En effet, le déplacement F1 du bouton de déblocage 130 déplace la lame 43, dont l'extrémité 431 agit sur un pan incliné 541 de la pièce intermédiaire 54. Celle-ci est montée de façon à pouvoir basculer, sous cette action, ce qui permet à son extension 542 de soulever l'élément de blocage 52, et donc d'extraire son extrémité 531 du logement 53. Dès lors, la poignée 110 peut être déplacée dans la direction F2, et actionnée le déverrouillage des pennes.

Des moyens de rappel (non illustrés) peuvent être prévus, pour ramener la poignée de déverrouillage 110 et le bouton de déblocage 130 dans la position verrouillée de la figure 5A. Avantageusement, cette opération peut être assurée par les moyens de transmission reliant la poignée de déverrouillage 110 aux pennes, des moyens de rappel associés à ces pennes contrôlant le retour dans la position verrouillée, ce mouvement étant transmis à la poignée de déverrouillage et aux boutons de déblocage.

Les figures 6A à 7C illustrent un deuxième mode de réalisation de l'invention.

Comme on le voit sur les figures 6A à 6C, la poignée de déverrouillage 110 et le bouton de déblocage 130 ont ici des formes extérieures similaires, et l'utilisateur peut, comme dans le mode de réalisation précédente, agir simultanément sur les deux éléments, avec deux doigts.

Dans ce mode de réalisation, les boutons de déblocage 130 n'est pas mobile en translation, mais peut basculer. Dans la position fermée des figures 6A à 6C, on constate que la poignée de déverrouillage 110 présente une première surface plane 61 et que le bouton de déblocage 130 présente une seconde surface plane 62 qui s'étendent dans le même plan (de préférence, pour des raisons esthétiques dans le plan également de la surface du cadre). Ces deux surfaces 61 et 62 viennent en appui l'une contre l'autre, et s'opposent l'une à l'autre, empêchant leurs déplacements respectifs.

Lors de l'action de déverrouillage, l'utilisateur appuie notamment sur la zone 63 du bouton de déblocage 130, qui bascule légèrement, comme illustré sur les figures 7A à 7C. De ce fait, la seconde surface plane 62 se soulève légèrement, et n'est plus en opposition avec la première surface plane 61 de la poignée de déverrouillage. Celle-ci peut alors être déplacée en translation, en passant sous la surface 62.

La figure 8 illustre schématiquement le bouton de déverrouillage selon ce mode de réalisation.

Le principe de fonctionnement de ce deuxième mode de réalisation est illustré par les vues en coupe des figures 9A et 9B. Dans la position fermée, ou verrouillée, on constate que les surfaces 61 et 62 du bouton de déblocage 130 et de la poignée 110 respectivement sont en appui l'une contre l'autre, et qu'en conséquence le déplacement en translation de la poignée de déverrouillage 110 n'est pas possible. Il n'est pas non plus possible d'agir, à l'aide d'un outil introduit par l'interstice 51, sur le bouton de déblocage, pour tenter de le faire basculer, du fait de la présence d'un élément de protection fixe 91, solidaire du cadre, et s'étendant au-dessus de ce bouton de déblocage.

Comme expliqué précédemment, et illustré par la figure 9B, en appuyant sur la portion 63 du bouton 130, l'utilisateur commande son basculement, et la surface 62 se déplace vers l'intérieur du véhicule, permettant de libérer la surface 61 correspondant, et donc la translation F2 de la poignée de déverrouillage 110.

Les moyens de déverrouillage et les moyens de déblocage peuvent être combinés de différentes autres manières, sans sortir du cadre de l'invention, dès lors qu'il est nécessaire d'agir sur les deux éléments, simultanément ou quasi-simultanément, pour pouvoir obtenir le déverrouillage.

## Revendications

1. Dispositif d'obturation d'une baie formée dans un élément de carrosserie d'un véhicule automobile, comprenant une partie fixe (11) et au moins un panneau mobile (16) par rapport à ladite partie fixe, guidé en coulissement par deux rails (15₁, 15₂) portés par ladite partie fixe, ledit panneau mobile (16) portant deux pênes (21_{A}, 21_{B}) aptes à coopérer avec deux gâches correspondantes, formés respectivement dans chacun desdits rails, et mobiles selon une direction de déverrouillage perpendiculaire à la direction de coulissement dudit panneau mobile, entre une position de verrouillage dans laquelle lesdits pênes sont en prise avec lesdites gâches, et une position de déverrouillage, permettant le coulissement, dans laquelle lesdits pênes sont extraits desdites gâches, ledit panneau mobile portant des moyens d'actionnement (110) desdits pênes, mobiles selon une direction d'actionnement parallèle à ladite direction de coulissement, et des moyens de renvoi d'angle transformant le mouvement desdits moyens d'actionnement dans une direction de déverrouillage, pour contrôler le déplacement d'un desdits pênes, **caractérisé en ce qu'**il comprend des moyens (130) de blocage desdits moyens d'actionnement, lesdits moyens de blocage (130) et lesdits moyens d'actionnement (110) étant placés en vis-à-vis de manière à être actionnables simultanément, à l'aide d'une seule main.

2. Dispositif d'obturation selon l'une quelconque de la revendication 1, **caractérisé en ce que** ledit panneau mobile porte au moins une portion de cadre (17) s'étendant sensiblement entre les extrémités desdits pênes, et présentant une première ouverture sur sa face latérale s'étendant vers l'extérieur, respectivement vers l'intérieur, dudit panneau mobile et/ou sur sa façade, permettant le déplacement d'une poignée de déverrouillage (110) appartenant auxdits moyens d'actionnement.

3. Dispositif d'obturation selon la revendication 2, **caractérisé en ce que** ladite portion de cadre porte, sur sa face latérale s'étendant vers l'intérieur, respectivement vers l'extérieur, dudit panneau mobile, une seconde ouverture permettant le déplacement d'un bouton de déblocage (130) appartenant auxdits moyens de blocage.

4. Dispositif d'obturation selon la revendication 3, **caractérisé en ce que** :
- dans une position de fermeture, ladite poignée de déverrouillage (110) est maintenue bloquée par un élément de blocage (52) ;
- dans une position d'ouverture, ledit bouton de déblocage (130) assure le déplacement dudit élément de blocage (52) de façon à libérer ladite poignée de déverrouillage (110).

5. Dispositif d'obturation selon la revendication 4, **caractérisé en ce que** ledit bouton de déblocage (130) porte une lame rigide (43), agissant sur une pièce intermédiaire (54) basculante pouvant passer d'une position de blocage à une position de libération, dans laquelle elle déplace ledit élément de blocage (52) de façon à libérer ladite poignée de déverrouillage.

6. Dispositif d'obturation selon la revendication 5, **caractérisé en ce que** ladite pièce intermédiaire présente un pan incliné (541), coopérant avec ladite lame rigide (43).

7. Dispositif d'obturation selon la revendication 3, **caractérisé en ce que** :
- dans une position de fermeture, ladite poignée de déverrouillage est maintenue bloquée par un prolongement (62) dudit bouton de déblocage (130), s'opposant au coulissement de ladite poignée de déverrouillage (110) ;
- dans une position d'ouverture, ledit prolongement (62) bascule vers l'intérieur du véhicule, de façon à libérer ladite poignée de déverrouillage (110).

8. Dispositif d'obturation selon la revendication 7, **caractérisé en ce que** ladite portion de cadre présente une surface fixe (91), s'étendant au moins au-dessus dudit prolongement.

9. Dispositif d'obturation selon l'une quelconque des revendications 2 à 8, **caractérisé en ce que** ladite portion de cadre porte au moins un élément de guidage (42) de ladite poignée de déverrouillage selon ladite direction d'actionnement.

10. Dispositif d'obturation selon l'une quelconque des revendications 1 à 7, **caractérisé en ce qu'**il comprend des moyens de rappel agissant sur chacun desdits pênes, et tendant à les ramener dans ladite position de verrouillage,
et **en ce que** lesdits moyens de transmission ramènent ladite poignée de déverrouillage et/ou ledit bouton de déblocage dans une position verrouillée, lorsque lesdits moyens de rappel ramènent lesdits pênes dans ladite position de verrouillage.

11. Véhicule automobile comprenant au moins un dispositif d'obturation selon l'une quelconque des revendications précédentes.

## Patentansprüche

1. Schließvorrichtung für eine Öffnung, die in einem Karosserieelement eines Kraftfahrzeugs ausgebildet ist, umfassend einen festen Teil (11) und mindestens eine in Bezug zum festen Teil bewegliche Platte (16), die von zwei Schienen (15₁, 15₂), die vom festen Teil getragen werden, bei der Verschiebung geführt wird, wobei die bewegliche Platte (16) zwei Riegel (21_{A}, 21_{B}) trägt, die geeignet sind, mit zwei entsprechenden Schließblechen zusammenzuwirken, die in jeder der Schienen ausgebildet und in eine Entriegelungsrichtung senkrecht auf die Verschieberichtung der beweglichen Platte zwischen einer Verriegelungsposition, in der die Riegel mit den Schließblechen in Eingriff sind, und einer Entriegelungsposition, die das Verschieben ermöglicht, in der die Riegel aus den Schließblechen gezogen werden, beweglich sind, wobei die bewegliche Platte Betätigungsmittel (110) der Riegel, die in eine Betätigungsrichtung parallel zur Verschieberichtung beweglich sind, und Eckumlenkmittel trägt, die die Bewegung der Betätigungsmittel in eine Entriegelungsrichtung umformen, um die Verlagerung eines der Riegel zu kontrollieren, **dadurch gekennzeichnet, dass** sie Sperrmittel (130) der Betätigungsmittel umfasst, wobei die Sperrmittel (130) und die Betätigungsmittel (110) einander gegenüberliegend angeordnet sind, um gleichzeitig mit einer Hand betätigbar zu sein.

2. Schließvorrichtung nach Anspruch 1, **dadurch gekennzeichnet, dass** die bewegliche Platte mindestens einen Rahmenabschnitt (17) trägt, der sich im Wesentlichen zwischen den Enden der Riegel erstreckt und eine erste Öffnung auf seiner Seitenfläche, die sich nach außen bzw. nach innen zur beweglichen Platte und/oder auf seiner Vorderseite erstreckt, aufweist, die die Verlagerung eines Entriegelungsgriffes (110), der den Betätigungsmitteln angehört, ermöglicht.

3. Schließvorrichtung nach Anspruch 2, **dadurch gekennzeichnet, dass** der Rahmenabschnitt auf seiner Seitenfläche, die sich nach innen bzw. nach außen zur beweglichen Platte erstreckt, eine zweite Öffnung trägt, die die Verlagerung eines Entsperrungsknopfes (130), der den Sperrmitteln angehört, ermöglicht.

4. Schließvorrichtung nach Anspruch 3, **dadurch gekennzeichnet, dass**:
- in einer Schließposition der Entriegelungsgriff (110) von einem Sperrelement (52) blockiert gehalten wird;
- in einer Öffnungsposition der Entsperrungsknopf (130) die Verlagerung des Sperrelements (52) gewährleistet, um den Entriegelungsgriff (110) freizugeben.

5. Schließvorrichtung nach Anspruch 4, **dadurch gekennzeichnet, dass** der Entsperrungsknopf (130) ein starres Blättchen (43) trägt, das auf ein schwenkbares Zwischenstück (54) einwirkt, das von einer Sperrposition in eine Freigabeposition übergehen kann, in der es das Sperrelement (52) verlagert, um den Entriegelungsknopf freizugeben.

6. Schließvorrichtung nach Anspruch 5, **dadurch gekennzeichnet, dass** das Zwischenstück eine geneigte Ebene (541) ist, die mit dem starren Blättchen (43) zusammenwirkt.

7. Schließvorrichtung nach Anspruch 3, **dadurch gekennzeichnet, dass**:
- in einer Schließposition der Entriegelungsgriff durch eine Verlängerung (62) des Entsperrungsknopfes (130), die sich dem Verschieben des Entriegelungsgriffes (110) widersetzt, gesperrt gehalten bleibt;
- in einer Öffnungsposition die Verlängerung (62) zum Inneren des Fahrzeugs schwenkt, um den Entriegelungskopf (110) freizugeben.

8. Schließvorrichtung nach Anspruch 7, **dadurch gekennzeichnet, dass** der Rahmenabschnitt eine feste Oberfläche (91) aufweist, die sich zumindest über der Verlängerung erstreckt.

9. Schließvorrichtung nach einem der Ansprüche 2 bis 8, **dadurch gekennzeichnet, dass** der Rahmenabschnitt mindestens ein Element (42) zur Führung des Entriegelungsgriffs in die Betätigungsrichtung trägt.

10. Schließvorrichtung nach einem der Ansprüche 1 bis 7, **dadurch gekennzeichnet, dass** sie Rückstellmittel umfasst, die auf jeden der Riegel einwirken und dazu neigen, sie in die Verriegelungsposition zurückzuführen,
und dass die Übertragungsmittel den Entriegelungsgriff und/oder den Entsperrungsknopf in eine verriegelte Position zurückführen, wenn die Rückstellmittel die Riegel in die Verriegelungsposition zurückführen.

11. Kraftfahrzeug, umfassend mindestens eine Schließvorrichtung nach einem der vorhergehenden Ansprüche.

## Claims

1. Device for closing off a bay formed in a bodywork element of a motor vehicle, comprising a fixed part (11) and at least one panel (16) that is mobile relative to said fixed part, guided in sliding by two rails (15₁, 15₂) carried by said fixed part,
said mobile panel (16) bearing two bolts (21_{A}, 21_{B}) capable of cooperating with two corresponding strikers, respectively formed in each of said rails, and being mobile in a direction of unlocking perpendicular to the direction of sliding of said mobile panel, between a locked position in which said bolts are engaged with said strikers, and an unlocked position enabling sliding, in which said bolts are removed from said strikers,
said mobile panel carrying actuating means (110) of said bolts, mobile along a direction of actuation parallel to said sliding direction, and angular gear transmission means converting the movement of said actuating means into an unlocking direction to control the shifting of one of said bolts, **characterized in that** it comprises means (130) for blocking said actuating means, said blocking means (130) and said actuating means (110) can be actuated simultaneously using only one hand.

2. Device for closing off according to claim 1, **characterized in that** said mobile panel carries at least one frame portion (17) extending substantially between the extremities of said bolts and having a first aperture on its side face extending towards the exterior and the interior respectively of said mobile panel and/or on its front, enabling the shifting of an unlocking handle (110) belonging to said means of actuation.

3. Device for closing off according to claim 2, **characterized in that** said frame portion carries, on its lateral face extending towards the interior and the exterior respectively of said mobile panel, a second aperture enabling the shifting of an unblocking button (130) belonging to said blocking means.

4. Device for closing off according to claim 3, **characterized in that**:
- in a closed position, said unlocking handle (110) is kept blocked by a blocking element (52);
- in an open position, said unblocking button (130) provides for the shifting of said blocking element (52) so as to release said unlocking handle (110).

5. Device for closing off according to claim 4, **characterized in that** said unblocking button (130) carries a rigid tongue (43) acting on a tilting intermediate part (54) that can pass from a blocking position to a releasing position in which it moves said blocking element (52) so as to release said unlocking handle.

6. Device for closing off according to claim 5, **characterized in that** said intermediate part has an inclined flat portion co-operating with said rigid tongue (43).

7. Device for closing off according to claim 3, **characterized in that**:
- in a closed position, said unlocking handle is kept blocked by an extension (62) of said unblocking button (130), opposing the sliding of said unlocking handle (110);
- in an open position, said extension (62) tilts towards the interior of the vehicle so as to release said unlocking handle (110).

8. Device for closing off according to claim 7, **characterized in that** said frame portion has a fixed surface (91), extending at least above said extension.

9. Device for closing off according to any one of the claims 2 to 8, **characterized in that** said frame portion caries at least one element (42) for guiding said unlocking handle along said actuating direction.

10. Device for closing off according to any one of the claims 1 to 7, **characterized in that** it comprises return means acting on each of said bolts and tending to bring them back to said locking position,
and **in that** said transmission means can be adapted to bring said unlocking handle and/or said unblocking button into a locked position, when said return means bring said bolts into said locking position.

11. Motor vehicle comprising at least one device for closing off according to any one of the preceding claims.
